# EUROPEAN PATENT APPLICATION

(11) **EP 4 657 624 A1**
(43) Date of publication of application: **03.12.2025**
(21) Application number: 23918574.7
(22) Date of filing: 07.12.2023
(51) Int. Cl.: H01M 50/204, H01M 10/613, H01M 10/643, H01M 10/653, H01M 10/655, H01M 50/213, H01M 50/291, H01M 50/293, H01M 50/342, H01M 50/35, H01M 50/548

(54) **POWER SUPPLY DEVICE AND METHOD FOR PRODUCING SAME**

(30) Priority: 27.01.2023 JP 2023011251
(71) Applicant: Panasonic Energy Co., Ltd., Osaka 570-8511 (JP)
(72) Inventor: KOHARA, Hikaru, Kadoma-shi, Osaka 571-0057 (JP)
(74) Representative: Eisenführ Speiser
(86) International application number: PCT/JP2023/043809
(87) International publication number: WO 2024/157619

(57) **Abstract**

A power source apparatus and its method of manufacture that can efficiently dissipate heat with a simple structure is provided. The power source apparatus 100 is provided with a plurality of rechargeable battery cells 1 that have a first end plane 1a and a second end plane 1b as opposing end planes of each cell; a battery holder 20 that retains the plurality of rechargeable battery cells 1 side by side with each first end plane 1a and each second end plane 1b aligned in respective planes, and formed with holder openings 27 that expose the second end plane 1b of each cell; heat conducting material 40 joined to the second end plane 1b of each cell through the holder openings 27; and an exterior case 10 that houses the battery holder 20. The exterior case 10 is formed with a case opening plane 16 that exposes the heat conducting material 40. The heat conducting material 40 is resin material applied to and cured on each second cell end plane 1b to bond the conducting material 40 to each respective second cell end plane 1b.

## Description

### TECHNICAL FIELD

The present disclosure relates to a power source apparatus and its method of manufacture.

### BACKGROUND ART

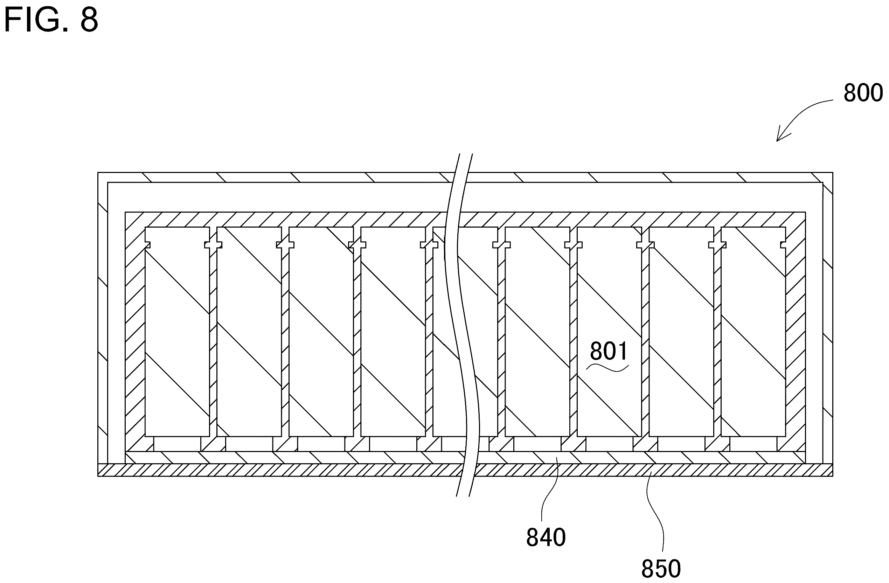

A plurality of battery cells that can be recharged such as lithium-ion rechargeable battery cells housed in an exterior case (e.g. Patent Literature 1) serve as a power source apparatus to power electrical equipment that includes electric scooters, automobiles, and construction machinery. Since rechargeable battery cells in this type of power source apparatus generate heat during charging and discharging, heat dissipating construction that can efficiently discharge heat to the outside is required. Heat dissipating construction can be, for example, as shown in the cross section view of Fig. 8, flexible insulating heat dissipating sheet 840 with superior thermal conductivity disposed at the bottom end planes of the battery cells 801 and a heat radiating plate 850 such as metal plate disposed under the bottom surface of the heat dissipating sheet.

However, this type of structure has the issue that the configuration for discharging heat is complex.

### CITATION LIST

### PATENT LITERATURE

[Patent Literature 1] Japanese Laid-Open Patent Publication JP 2022-000866

### SUMMARY OF THE INVENTION

### TECHNICAL PROBLEM

One object of the present disclosure is to provide a power source apparatus and its method of manufacture that can efficiently dissipate heat with a simple structure.

### SOLUTION TO THE PROBLEM

The power source apparatus for one embodiment of the present disclosure is provided with a plurality of rechargeable battery cells that have a first end plane and a second end plane as opposing end planes of each cell; a battery holder that retains the plurality of rechargeable battery cells side by side with each first end plane and each second end plane aligned in respective planes, and formed with holder openings that expose the second end plane of each cell; heat conducting material joined to the second end plane of each cell through the holder openings; and an exterior case that houses the battery holder. The heat conducting material is resin material applied to and cured on each second cell end plane to bond the conducting material to each respective second cell end plane.

The power source apparatus method of manufacture for another embodiment of the present disclosure includes a step to stow the plurality of rechargeable battery cells side by side in the battery holder with opposing cell end planes aligned with each first end plane and each second end plane in respective planes while exposing each second cell end plane through a holder opening; a step to apply heat conducting material, which is uncured resin, to each second cell end plane exposed through a holder opening with the second cell end planes oriented facing upward; and a step to cure the heat conducting material to solidify it inside the holder openings while forming the exposed surface of the heat conducting material into flat surface.

### ADVANTAGEOUS EFFECTS OF THE INVENTION

In one embodiment of the power source apparatus and its method of manufacture of the present disclosure, resin-based heat conducting material is directly fixed to one end plane of the rechargeable battery cells, such as the bottom end plane, rather than disposing heat dissipating plate (e.g. metal plate) at one end of the battery cells. This realizes a simple low cost power source apparatus that reduces interfacial junctions between different materials and improves heat dissipating properties.

### BRIEF DESCRIPTION OF THE DRAWINGS

[FIG. 1] is an oblique view of the power source apparatus for embodiment 1.
[FIG. 2] is an exploded oblique view of the power source apparatus in FIG. 1 as viewed at an angle from below.
[FIG. 3] is an exploded oblique view of the power source apparatus in FIG. 1.
[FIG. 4] is an exploded oblique view of the battery module in FIG. 3.
[FIG. 5] is an exploded oblique view of the battery holder in FIG. 4.
[FIG. 6] is an oblique view of the battery holder in FIG. 5 as viewed at an angle from below with an enlarged inset.
[FIG. 7] is an enlarged oblique cross-section through the line VII in FIG. 3.
[FIG. 8] is a schematic cross-sectional view of a comparative example power source apparatus.
[FIG. 9] is a schematic cross-section vertically through the battery holder in FIG. 6.
[FIG. 10] is a schematic cross-sectional view of the power source apparatus for embodiment 2.
[FIG. 11] is a schematic cross-sectional view of the power source apparatus for embodiment 3.
[FIG. 12] is an exploded oblique view of the power source apparatus in FIG. 11 as viewed at an angle from below.
[FIG. 13] is an enlarged cross-sectional view of FIG. 11.

### DESCRIPTION OF THE EMBODIMENTS

Various embodiments of the present disclosure can be specified by the following configurations and characteristics.

In another embodiment of the power source apparatus of the present disclosure described above, the heat conducting material has (electrically) insulating properties.

In another embodiment of the present disclosure, the exterior case of the power source apparatus described above partially covers the periphery of the heat conducting material around the open bottom of the case. By covering the periphery of the heat conducting material with part of the exterior case, heat conducting material delamination from the rechargeable battery cell second end planes can be suppressed.

Further, in another embodiment of the present disclosure, the power source apparatus described in any of the above embodiments is provided with step regions around the inside of the battery holder openings such that the inside diameter of the holder openings increases towards the inside of the battery holder, and the holder openings including the step regions are embedded in the heat conducting material. This configuration fills heat conducting material inside the battery holder openings and anchors it inside the battery holder openings making heat conducting material delamination from the rechargeable battery cell second end planes more difficult.

Further, in another embodiment of the present disclosure, the power source apparatus described in any of the above embodiments is characterized in that first cell end planes are positive electrodes and second cell end planes are negative electrodes of the plurality of rechargeable battery cells, and a gas discharge outlet that opens in response to increased pressure inside each rechargeable battery cell is provided at each first end plane.

Further, in another embodiment of the present disclosure, the power source apparatus described in any of the above embodiments has a gas discharge path formed between the outer surface of the battery holder covering the first end planes of the plurality of rechargeable battery cells and the inside surface of the exterior case. While this configuration provides a gas discharge path at the positive electrode side of the rechargeable battery cells where gas discharge outlets are established, the negative electrode side, which has no gas discharge outlets, is sealed off by the heat conducting material to realize the positive feature that the outline of the power source apparatus is made compact.

Further, in another embodiment of the present disclosure, the power source apparatus described in any of the above embodiments has heat conducting material made of silicone-based or urethane-based resin.

Further, in another embodiment of the present disclosure, the power source apparatus described in any of the above embodiments has heat conducting material with thermal conductivity greater than or equal to 1 W/(m·K).

Further, in another embodiment of the present disclosure, the power source apparatus described in any of the above embodiments has a battery holder made of resin.

Further, in another embodiment of the present disclosure, the power source apparatus described in any of the above embodiments has each of the plurality of rechargeable battery cells formed in a circular cylindrical shape.

Further, in another embodiment of the present disclosure, the method of manufacture of the power source apparatus described in any of the above embodiments is characterized in that the step to cure the heat conducting material and form a flat surface includes inserting the battery holder into the open bottom surface of the exterior case with the heat conducting material in the uncured state and curing the heat conducting material to attach the exterior case. This allows heat conducting material to be hardened onto rechargeable battery cell second end planes while simultaneously attaching the exterior case that covers the battery holder.

Further, in another embodiment of the present disclosure, the method of manufacture of the power source apparatus described in any of the above embodiments is characterized in that the step to cure the heat conducting material and form a flat surface includes pressing case extension tabs formed around the exterior case opening plane against the uncured heat conducting material to form a single plane that includes the case extension tabs and the outer surface of the heat conducting material. By covering the periphery of the heat conducting material with part of the exterior case, heat conducting material delamination from rechargeable battery cell second end planes can be suppressed.

The following describes the present disclosure in detail with reference to the figures (drawings). However, embodiments described below are merely examples intended to illustrate technical concepts of the present disclosure and the present disclosure is not limited to those examples. Further, components cited in the claims are in no way limited to the components in the embodiments. Unless specifically stated otherwise, dimensions, materials, shapes, relative disposition, and other aspects of the components described below are merely illustrative and are not intended to limit the scope of the disclosure. Note that the size, positional relationships, and other characteristics of components shown in the drawings may be exaggerated for the purpose of clear explanation. Moreover, identical names and reference numbers in the following descriptions indicate identical or similar components, and their detailed explanations may be omitted as appropriate. Furthermore, elements of the present disclosure may be configured such that a plurality of elements combine to form a single component that serves a plurality of functions, and conversely, a plurality of elements can implement a single function.

The power source apparatus of the present disclosure can be used, for example, in construction machinery; as the driving power source in hybrid and electric vehicles, electric scooters (e.g. home delivery scooters), electric carts used at golf courses, factories, and airports; as the power source in self-propelled delivery robots; and as the power source in electric assist bicycles. It can also be used as the power source in portable electric equipment such as wireless communication devices, electric vacuum cleaners, and electric hand tools. Alternatively, it can be used as a stationary power storage device for computer server backup power, or as a power source used in the household, office, and factory. The following describes a power source apparatus used as the driving power source in a construction machine as one embodiment of the present disclosure.

### [Embodiment 1]

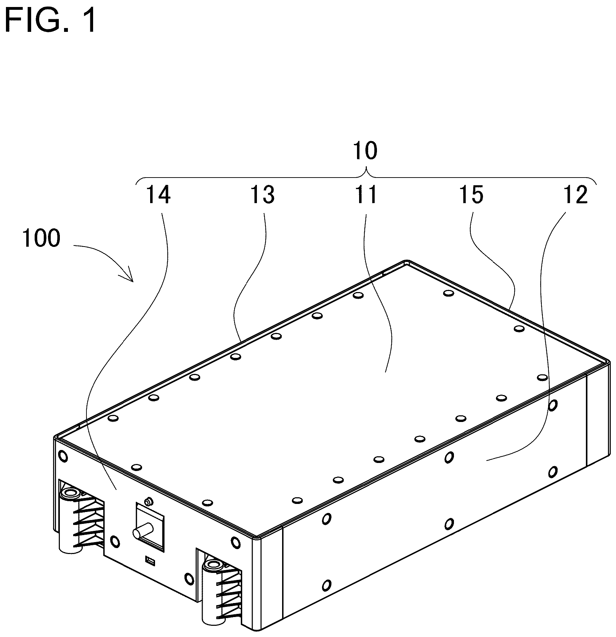

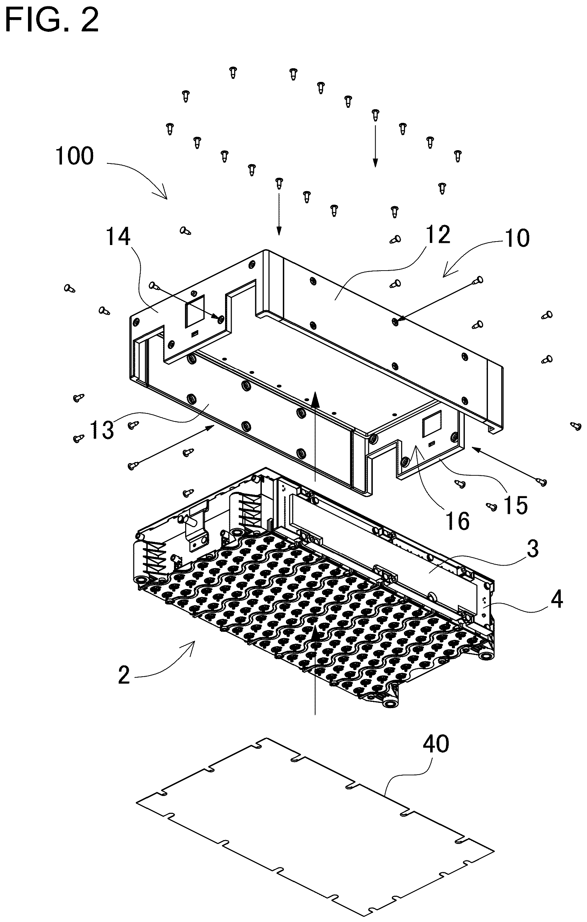

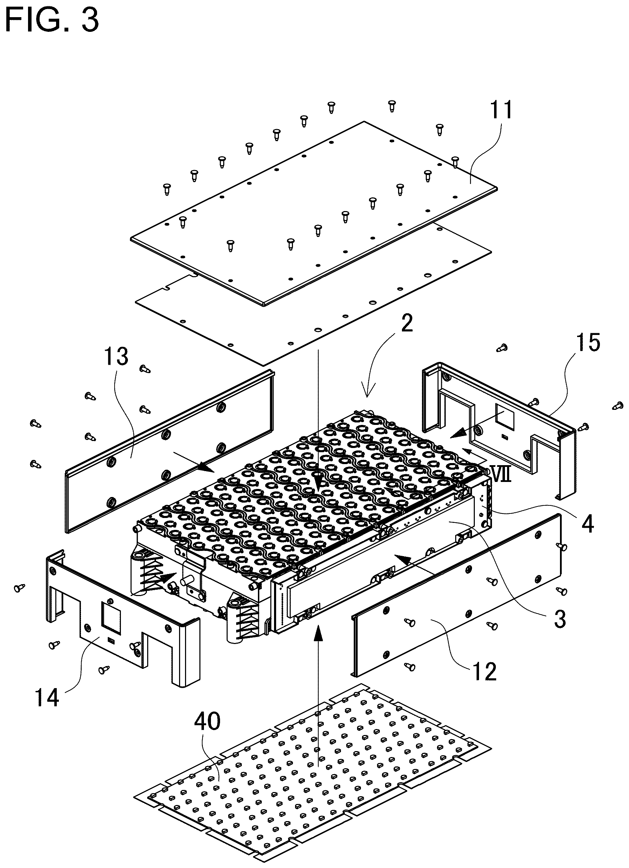

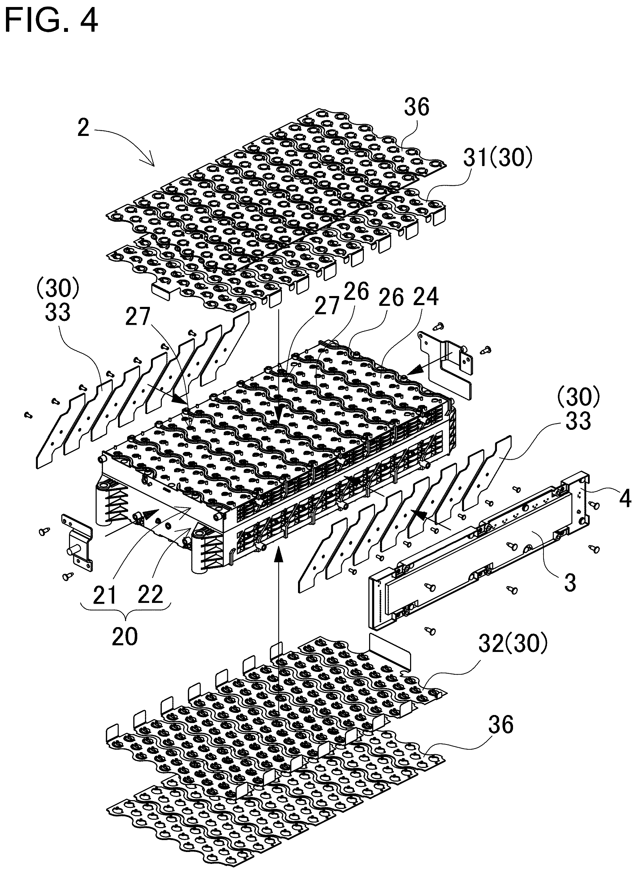

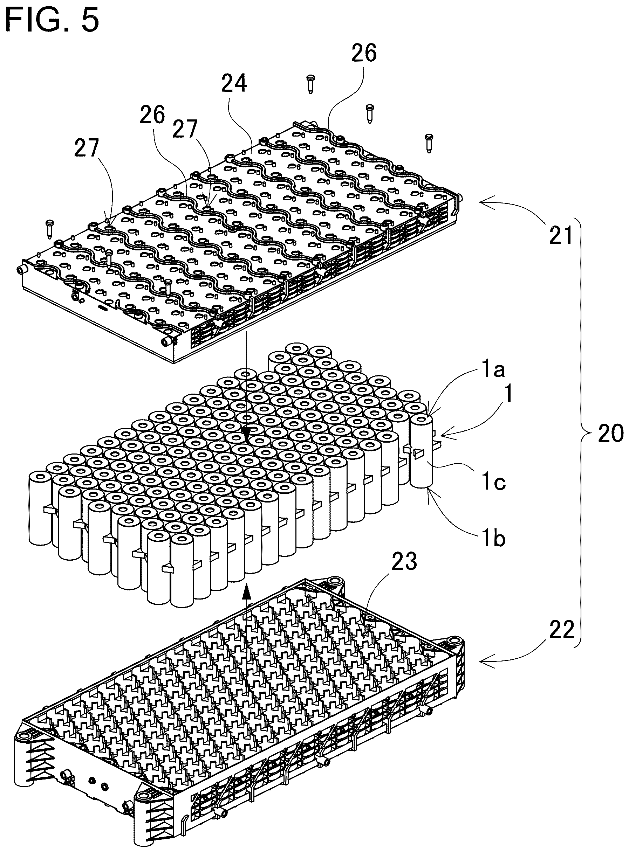

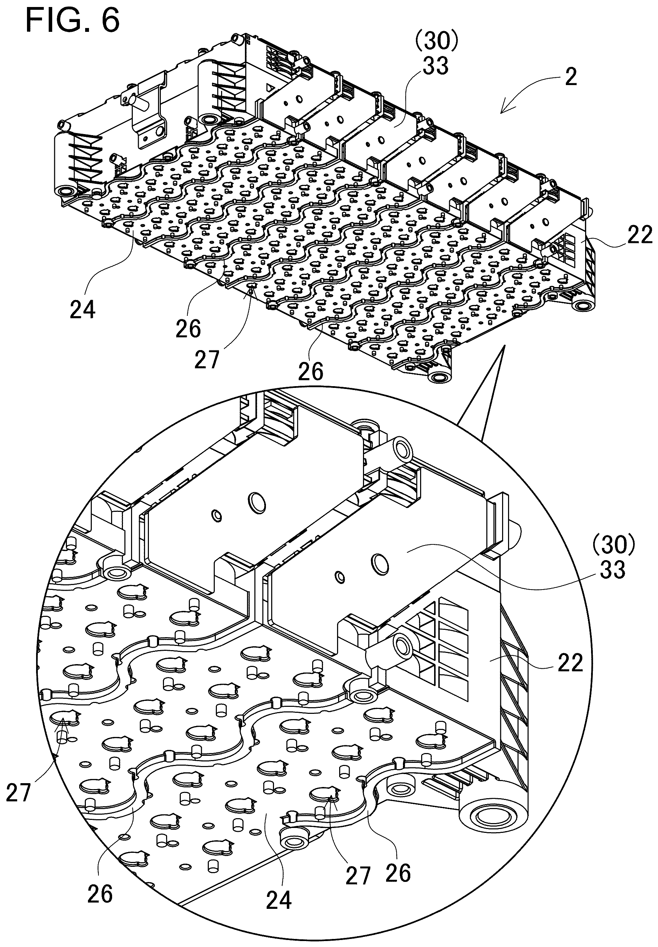

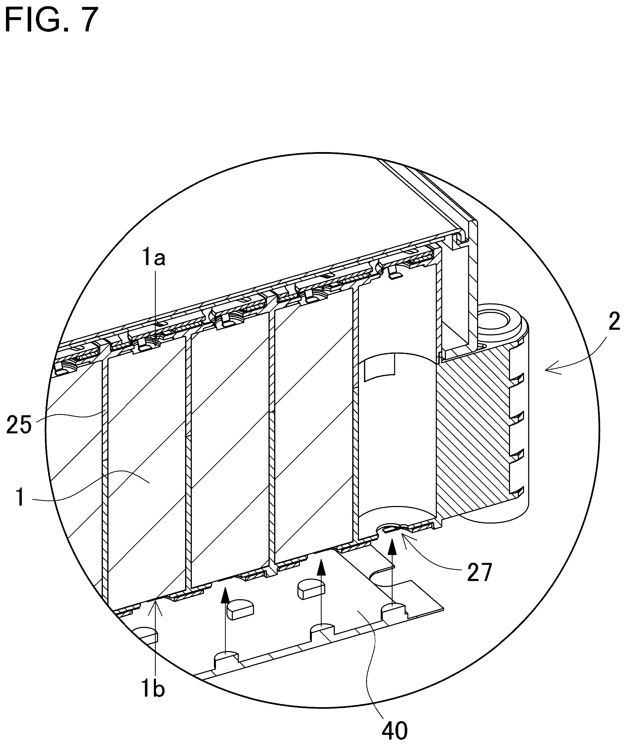

FIGS. 1-7 show the power source apparatus 100 for embodiment 1 of the present disclosure. In these figures, FIG. 1 is an oblique view of the power source apparatus 100 for embodiment 1; FIG. 2 is an exploded oblique view of the power source apparatus100 in FIG. 1 as viewed at an angle from below; FIG. 3 is an exploded oblique view of the power source apparatus100 in FIG. 1; FIG. 4 is an exploded oblique view of the battery module 2 in FIG. 3; FIG. 5 is an exploded oblique view of the battery holder 20 in FIG. 4; FIG. 6 is an oblique view of the battery holder 20 in FIG. 5 as viewed at an angle from below; and FIG. 7 is an enlarged oblique cross-section through the line VII in FIG. 3 respectively. The power source apparatus 100 shown in these figures is provided with a battery module 2, heat conducting material 40, and an exterior case 10.

### (Exterior Case 10)

As shown in FIG. 1, the exterior case 10 has a box shape with a hollow interior to house the battery module 2. As shown in FIG. 2, the bottom surface is open and forms the case opening plane 16. The heat conducting material 40 is exposed to the outside at this open bottom surface. The open bottom surface exterior case 10 can be pre-formed as a single unit, configured with a separate right case and left case, or assembled from a plurality of plate material. In the example shown in the exploded oblique view of FIG. 3, the exterior case 10 is formed in an open bottom box configuration by joining a top plate 11, left and right side plates 12, 13, and front and rear end plates 14, 15. This type of exterior case 10 is made with superior strength material such as metal. Alternatively, the exterior case 10 can be made with resin material such as polycarbonate or ABS (Acrylonitrile Butadiene Styrene) to enhance insulation.

### (Battery Module 2)

As shown in the exploded oblique view of FIG. 4, the battery module 2 is configured with a plurality of rechargeable battery cells 1 retained in a battery holder 20 and connected via lead plates 30. In addition, a circuit board 3 is disposed on the side of the battery module 2 and housed in a circuit board holder 4.

### (Battery Holder 20)

The battery holder 20 retains a plurality of rechargeable battery cells 1. The battery holder 20 covers the first cell end plane 1a and the second cell end plane 1b, which are opposing cell end planes, as well as the cell side surface 1c that joins the first and second end plane of each rechargeable battery cell 1. In the example shown in the exploded oblique view of FIG. 5, the battery holder 20 is divided into a first holder 21 and a second holder 22, and rechargeable battery cells 1 are sandwiched between those holders. Hollow holder cylindrical sections 23 are established in the first holder 21 and second holder 22 respectively to individually retain each rechargeable battery cell 1 and holder covers 24 are provided to close off the end surfaces of the hollow holder cylindrical sections 23. The holder cylindrical sections 23 and the holder covers 24 together form cell storage space for housing the rechargeable battery cells 1. To avoid contact between adjacent rechargeable battery cells 1, each cell storage area is isolated by partition walls 25 established inside each holder cylindrical section 23. Meanwhile, the outer surface of each holder cylindrical section 23 is formed in an integrated manner with adjacent holder cylindrical sections 23. Further, the holder covers 24 have side walls 26 for aligning the lead plates 30 described subsequently. The battery holder 20 can be made from material with superior insulating properties such as thermoplastic resins including modified polyphenylene ether (m-PPE), ABS (Acrylonitrile Butadiene Styrene) resin, polycarbonate (PC), polypropylene (PP), and polybutylene terephthalate (PBT). Alternatively, the battery holder 20 can also be made from thermosetting resins such as silicone resin, unsaturated phenolic resin, and unsaturated polyester resin.

### (Rechargeable Battery Cells 1)

Each rechargeable battery cell 1 is elongated in one direction with a pair of opposing end planes perpendicular to the elongated direction. The opposing end planes are the first cell end plane 1a and the second cell end plane 1b. In addition, each battery cell has a cell side surface 1c that connects between the first cell end plane 1a and the second cell end plane 1b. Preferably, the first cell end plane 1a serves as the positive electrode, and the second cell end plane 1b serves as the negative electrode. A gas discharge outlet that opens in response to increased internal pressure is provided in the positive electrode first cell end plane 1a of each battery cell 1. This type of gas discharge outlet can be a safety valve or a sealed end plane structure with a cut-line that opens due to high internal pressure.

Any known type of rechargeable batteries, such as lithium-ion rechargeable batteries, nickel-metal hydride batteries, or nickel-cadmium batteries can be appropriately used as the rechargeable battery cells 1. Further, the external shape of the rechargeable battery cells 1 can be rectangular (prismatic) or circular cylindrical. Circular cylindrical lithium-ion rechargeable batteries are used in the example shown in FIG. 5.

### (Lead Plates 30)

The lead plates 30 connect the plurality of rechargeable battery cells 1 held in the battery holder 20 in series and parallel. Lead plates 30 are formed from sheet metal with superior conductivity such as nickel. In the example shown in FIG. 4, eight groups of twenty parallel-connected rechargeable battery cells 1 are connected in series. The number of cells connected in series and parallel is not limited to this example, and the connection configuration can be suitably designed to meet application requirements of the power source apparatus.

The plurality of rechargeable battery cells 1 are retained side by side in the battery holder 20 with first cell end planes 1a and the second cell end planes 1b aligned in different respective planes. In the example shown in FIG. 5, battery cells are held in the battery holder 20 with first cell end planes 1a serving as positive electrodes facing upward, and second cell end planes 1b serving as the negative electrodes facing downward. Lead plates 30 connect rechargeable battery cells 1 retained in this configuration in series and/or parallel. As shown in FIG. 4, lead plates 30 include first lead plates 31 disposed on the first cell end planes 1a, second lead plates 32 disposed on the second cell end planes 1b, and third lead plates 33 disposed on the sides of the battery holder 20 to connect the first and second lead plates 31 and 32.

Depending on requirements, lead insulating sheets 36 can be disposed over the lead plates 30. Lead insulating sheets 36 are formed from material with superior insulating properties such as paper or mica.

### (Circuit Board 3)

Battery cells in the battery module 2 connect through the lead plates 30 with a circuit board 3. The circuit board 3 implements charge/discharge circuitry for charging and discharging the rechargeable battery cells 1, and protection circuitry that monitors rechargeable battery cell 1 voltage, current, and temperature and cuts off current when abnormality is detected. The circuit board 3 is made with material such as glass epoxy substrate, and the circuit board holder 4 that houses the circuit board 3 is made with insulating material such as resin.

### (Holder Openings 27)

As shown in FIG. 6, the bottom surface of the battery holder 20 has holder openings 27 that expose second cell end planes 1b of the rechargeable battery cells 1 held inside. Electrodes exposed through the holder openings 27 facilitate connection with the lead plates 30.

### (Heat Conducting Material 40)

In addition, as shown in the enlarged oblique cross-section in FIG. 7, the second end plane 1b of each rechargeable battery cell exposed through a holder opening 27 is bonded with heat conducting material 40. The heat conducting material 40 is resin material applied to, cured on, and bonded with each second cell end plane 1b. Direct attachment of resin-based heat conducting material 40 to the bottom ends of the rechargeable battery cells 1 makes it unnecessary to dispose metal heat dissipating plate under the battery cells and realizes a simplified cost-effective power source apparatus that improves heat dissipating characteristics by reducing the number of interfaces between dissimilar materials.

FIG. 8 shows a comparative example power source apparatus 800 with a structure for efficiently dissipating heat generated by the rechargeable battery cells to the outside. This power source apparatus 800 has heat dissipation sheet 840 with superior insulating and thermal conducting properties disposed at the bottom of the rechargeable battery cells 801, and metal heat dissipation plate 850 disposed under that heat dissipation sheet 840. By compressing the flexible heat dissipation sheet 840 with the metal heat dissipation plate 850, the heat dissipation sheet 840 thermally bonds with the bottom surfaces of the rechargeable battery cells 801. In this structure, heat generated by the rechargeable battery cells 801 is transferred through the heat dissipation sheet 840 to the heat dissipation plate 850. This power source apparatus has the drawback that the heat dissipation structure is complex.

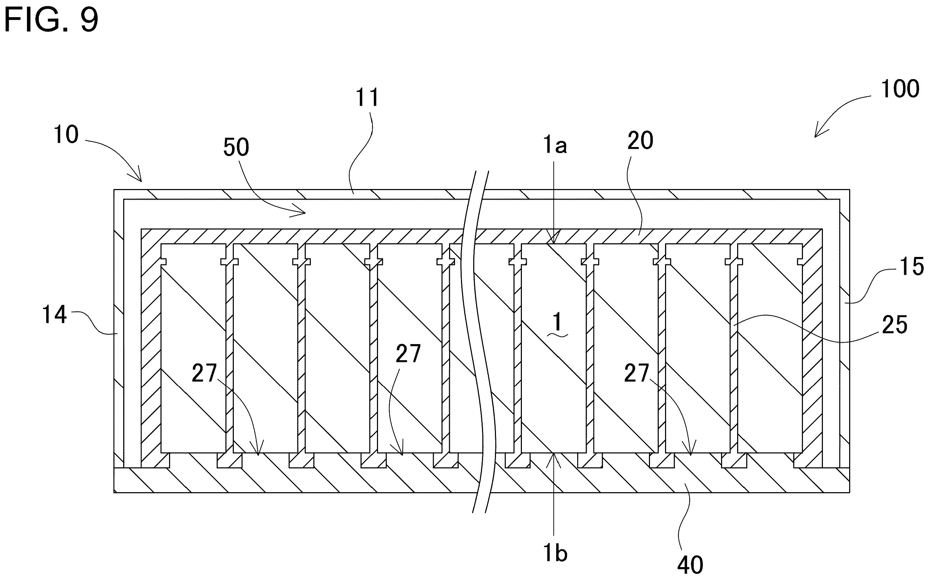

In contrast, as shown in the cross-sectional view of FIG. 9, the power source apparatus 100 of the present embodiment ensures heat dissipation by simply joining heat conducting material 40 to the bottom of the rechargeable battery cells 1. Furthermore, the resin heat conducting material 40 can be formed by hardening uncured resin applied to the bottom surfaces of the rechargeable battery cells 1. During the resin application process, pressing the uncured resin with an assembly fixture such as a pressure plate can fill resin into the bottom surfaces of the battery cells 1 without gaps to easily insure sustainable thermal bonding with the battery cells. Here, the schematic cross-section in FIG. 9 does not show the lead plates 30, which are omitted to simplify explanation. In actuality, uncured resin also fills gaps around the regions where lead plates 30 connect with rechargeable battery cell 1 second end planes 1b to further insure thermal bonding between the heat conducting material 40 and the battery cell end planes.

The heat conducting material 40 is made of material with superior thermal conductivity. The thermal conductivity of the heat conducting material 40 is preferably greater than or equal to 1 W/(m·K), and more preferably greater than or equal to 2 W/(m·K).Further, it is also desirable for the heat conducting material 40 to have (electrical) insulating properties. Resins systems such as silicone, urethane, and epoxy resins can be suitably used as heat conducting material 40. Furthermore, while increasing uncured resin viscosity is desirable, it should have sufficient fluidity to fill the gaps around regions where lead plates 30 connect with the rechargeable battery cell 1 second end planes 1b.

To further enhance the heat dissipation, a forced cooling mechanism can be fixed on heat radiating material. For example, metal plate that includes an internal refrigerant circulating system can be employed. Depending on requirements, this type of metal plate can be thermally bonded to heat radiating material via heat dissipation sheet.

The heat conducting material 40 is disposed on rechargeable battery cell 1 second end planes 1b, which establishes the bottom surface in examples such as that shown in FIG. 9. Meanwhile, rechargeable battery cell 1 first end planes 1a at the top of FIG. 9 are covered by the battery holder 20 with first lead plates 31 connected through holder openings 27. In addition, a gas discharge path 50 is formed between the outer surface of the battery holder 20 covering first cell end planes 1a and the inside surface of the exterior case 10. While this configuration provides a gas discharge path 50 at the positive electrode side of the rechargeable battery cells 1 where gas discharge outlets are established, the negative electrode side, which has no gas discharge outlets, is sealed off by the heat conducting material 40. This realizes the positive feature that power source apparatus 100 outline can be made compact.

### [Embodiment 2]

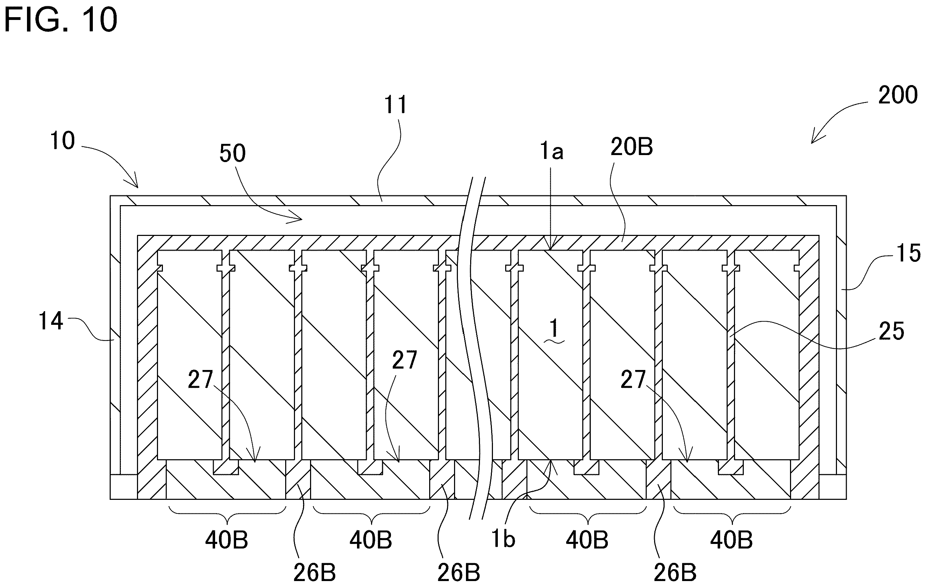

In embodiment 1 described above, the heat conducting material 40 is electrically insulating and that allows it to span across and connect with a plurality of rechargeable battery cells 1. In other words, the heat conducting material 40 is disposed over the entire surface of all the rechargeable battery cell 1 second end planes 1b. However, the present disclosure is not limited to this configuration, and heat conducting material can also be partitioned to connect only with rechargeable battery cell end planes at the same electrical potential. An example of this arrangement is shown in the schematic cross-section of the power source apparatus 200 for embodiment 2 in FIG. 10. In this figure, components that are the same as those described previously for the power source apparatus 100 of embodiment 1 have the same reference numbers and their detailed description is omitted as appropriate.

The power source apparatus 200 shown in FIG. 10 is provided with an exterior case 10, a battery module 2, and heat conducting material 40B. The battery holder 20B that forms the battery module 2 has extended partition walls 26B that divide the heat conducting material 40 into sections. As a result, heat conducting material 40B is partitioned to separately cover the end planes of rechargeable battery cells 1 connected by a common lead plate. This configuration makes it unnecessary for the heat conducting material 40B to be electrically insulating. Accordingly, without the constraining requirement for electrical insulation, heat conducting material 40B properties can be more easily optimized.

### [Embodiment 3]

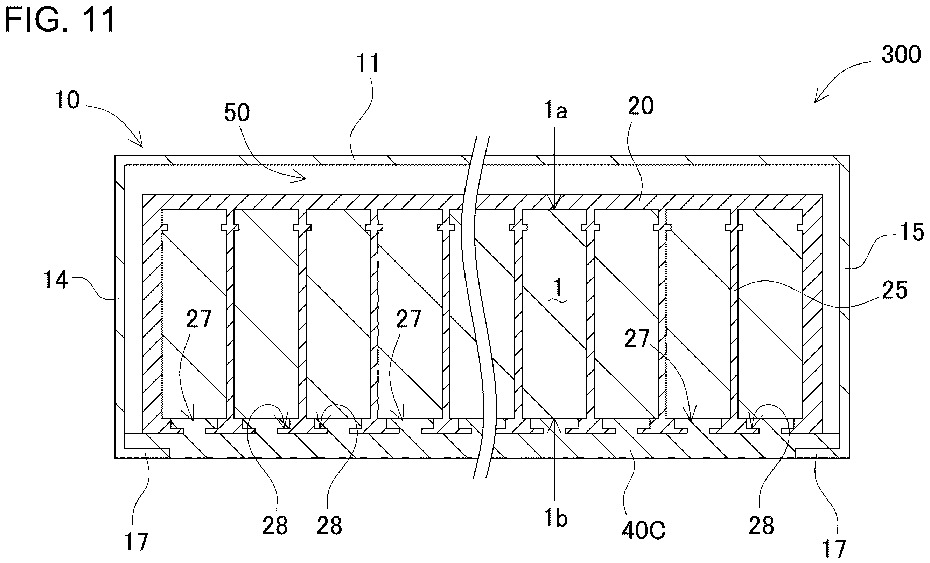

In addition to systems that depend on the inherent adhesive force of the resin to bond the heat conducting material 40 to rechargeable battery cell 1 second end planes 1b, physical structures that enhance connection between the heat conducting material 40 and the battery holder 20 can also be included. For example, the periphery of the bottom case opening plane 16 of the exterior case 10 that houses the battery module 2 can have case extensions that locally cover the heat conducting material 40. In addition, holder openings 27 in the bottom cover 24 of the battery holder 20 can be formed with steps around their circumference. An example with these modifications is shown in the schematic cross-section of the power source apparatus 300 for embodiment 3 in FIG. 11. In this figure as well, components that are the same as those described previously for the power source apparatus 100 of embodiment 1 have the same reference numbers and their detailed description is omitted as appropriate.

### (Case Extension Tabs 17)

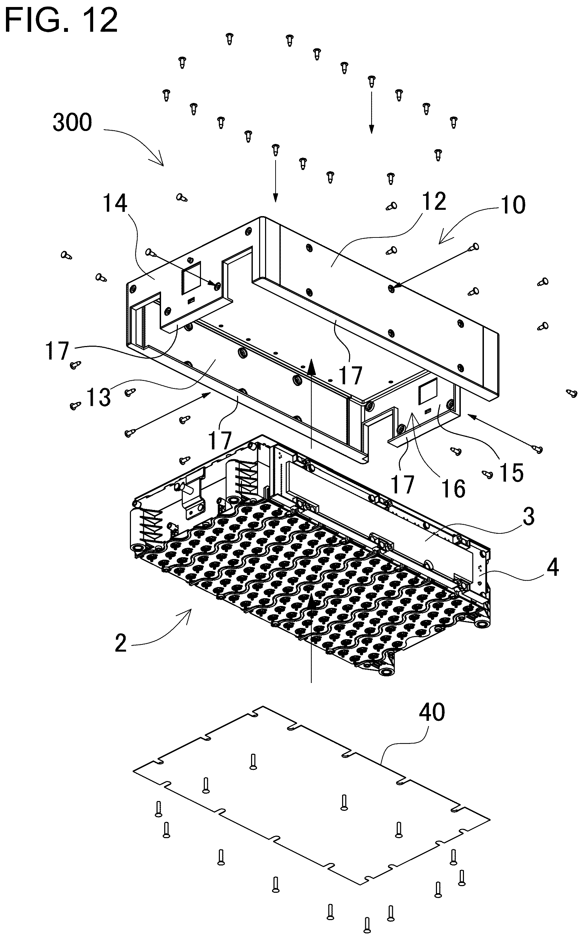

The power source apparatus 300 shown in FIG. 11 is provided with an exterior case 10, a battery module 2, and heat conducting material 40C. End plates 14, 15 that establish front and rear sides of the exterior case 10 are bent at the bottom in L-shapes to form case extension tabs 17. As shown in the exploded oblique view of FIG. 12, case extension tabs 17 are disposed in a continuous manner around the case opening plane 16 to locally cover the perimeter of the heat conducting material 40C. Accordingly, case extensions tabs 17 support the heat conducting material 40C from the underside and prevent heat conducting material 40C delamination from the battery module 2. Note that case extension tabs 17 can be established around the entire circumference of the case opening plane 16, only on the side plates 12, 13, or only on the end plates 14, 15.

### (Step Regions 28)

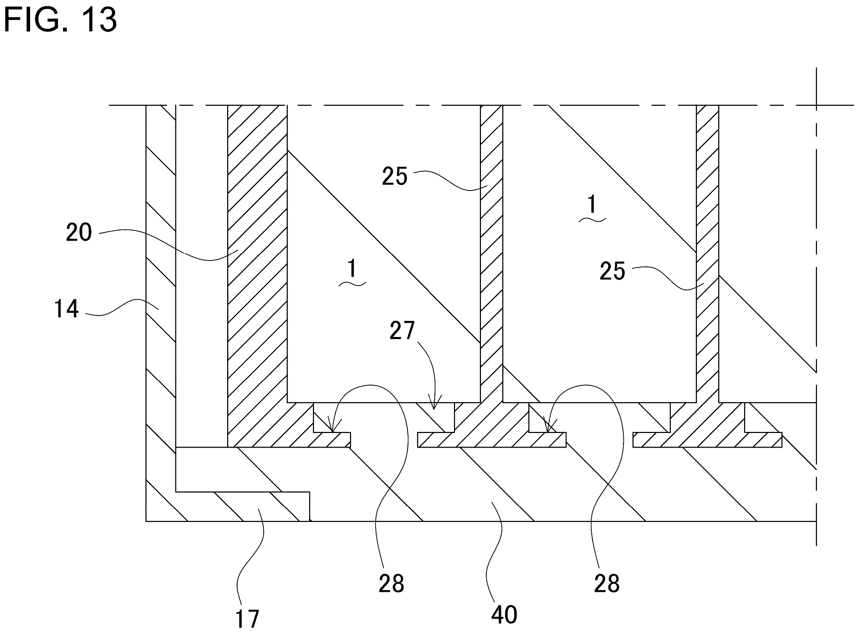

The battery holder 20, which forms the battery module 2, is provided with step regions 28 around the inside of the holder openings 27 in the bottom holder cover 24. The step regions 28 make the inside diameter of each holder opening 27 wider at the interior than at the outside. With this configuration, uncured resin can flow into the battery holder 20 through the holder openings 27 to fill inside the step regions 28, and after curing, the resin is anchored inside the holder openings 27 making heat conducting material 40C delamination from the battery cell second end planes 1b more difficult. Further, as shown in the enlarged cross-sectional view of FIG. 13, for the case of electrically insulating heat conducting material 40C, this configuration increases the distance from rechargeable battery cell 1 end planes to the outside to increase electrical insulation.

While the power source apparatus 300 of embodiment 3 described above has both the case extension tabs 17 and step regions 28, depending on heat conducting material 40C properties, adhesive strength, and specification requirements, it should be clear that either case extension tabs 17 or step regions 28 alone can also be provided.

### [Power Source Apparatus Method of Manufacture]

The following describes the method of manufacture for the previously described power source apparatus. First, a plurality of rechargeable battery cells 1 are stowed in the battery holder 20 with first end planes 1a and second end planes 1b aligned in respective planes. For example, the plurality of rechargeable battery cells 1 can be inserted into holder cylindrical sections 23 and sandwiched between the first holder 21 and the second holder 22. This retains the battery cells 1 with second end planes 1b exposed through the holder openings 27.

Next, with the second cell end planes 1b exposed through the holder openings 27 facing upward, uncured resin that forms the heat conducting material 40 is applied over the entire surface of the battery holder 20 bottom holder cover 24. While still in the unhardened state, the resin is pressed with a assembly fixture such as a pressure plate.

In this state, the heat conducting material 40 is cured to fix it in the battery holder openings 27 while planarizing the surface of heat conducting material 40 outside the holder openings 27. Accordingly, this makes it possible to directly attach resin-based heat conducting material 40 to the bottom ends of the rechargeable battery cells 1 without the need to dispose metal heat dissipating plate under the battery cells and realizes a simplified, low-cost power source apparatus that improves heat dissipating characteristics by reducing the number of interfaces between dissimilar materials.

In the method of manufacture for the power source apparatus 100 of embodiment 1, the battery holder 20 is inserted into the exterior case 10 through the open bottom surface with the heat conducting material 40 still in the uncured state. The heat conducting material 40 is then hardened to join it with the exterior case 10. This makes it possible to attach heat conducting material 40 to rechargeable battery cell 1 second end planes while also fastening the exterior case 10 that covers the battery holder 20.

In the method of manufacture for the power source apparatus 300 of embodiment 3, case extension tabs 17 formed around the exterior case 10 opening plane 16 press against the uncured heat conducting material 40 to establish a single planar surface that includes the outer surface of the heat conducting material 40. A configuration that covers the perimeter of the heat conducting material 40 with exterior case 10 extension tabs 17 can suppress delamination of the heat conducting material 40 from battery cell 1 second end planes 1b.

In the examples described above, the power source apparatus is mounted on electrical equipment to supply power to that equipment. Further, when the remaining capacity of the power source apparatus drops, or when power source apparatus performance degrades due to aging; it can be replaced to allow continued use of the electrical equipment. However, the present disclosure is not limited to power source apparatus that primarily house rechargeable battery cells and are replaceable, but is also applicable to configurations where the rechargeable battery cells are directly housed inside the case of the electrical equipment itself. In the context of the present disclosure, a "power source apparatus" refers to any configuration where rechargeable battery cells are housed within a case, and this includes electrical equipment that houses driving power rechargeable battery cells within its own the case. Specifically, the present disclosure is not limited to replaceable power source apparatus, but can also be applied to electrical equipment with internal rechargeable battery cells.

### INDUSTRIAL APPLICABILITY

The power source apparatus and method of manufacture of the present disclosure can be used appropriately in construction machinery and as the driving power source in hybrid and electric vehicles. It is also suitable for use as the driving power source in vehicles such as self-propelled delivery robots, electric carts used on golf courses, and electric scooters, etc. In addition, it can also be suitably applied as the driving power source in electric assist bicycles, as well as the power source in portable electric equipment including wireless communication devices, electric hand tools, and electric vacuum cleaners. It can also be used appropriately in stationary power storage applications including computer server backup power, and as a power source unit for residential, office, and factory use.

### REFERENCE SIGNS LIST

- 100, 200, 300, 800: power source apparatus
- 1: rechargeable battery cell
- 1a: first cell end plane
- 1b: second cell end plane
- 1c: cell side surface
- 2: battery module
- 3: circuit board
- 4: circuit board holder
- 10: exterior case
- 11: top plate
- 12: side plate
- 13: side plate
- 14: end plate
- 15: end plate
- 16: case opening plane
- 17: case extension tab
- 20: battery holder
- 21: first holder
- 22: second holder
- 23: holder cylindrical section
- 24: holder cover
- 25: partition wall
- 26: side wall
- 27: holder opening
- 28: step region
- 30: lead plate
- 31: first lead plate
- 32: second lead plate
- 33: third lead plate
- 36: lead insulating sheet
- 40, 40B, 40C: heat conducting material
- 50: gas discharge path
- 801: rechargeable battery cell
- 840: heat dissipation sheet
- 850: heat dissipation plate

## Claims

1. A power source apparatus comprising:
a plurality of rechargeable battery cells that have a first end plane and a second end plane as opposing end planes of each cell;
a battery holder that retains the plurality of rechargeable battery cells side by side with each first end plane and each second end plane aligned in respective planes, and formed with holder openings that expose the second end plane of each cell;
heat conducting material joined to the second end plane of each cell through the holder openings; and
an exterior case that houses the battery holder,
wherein the exterior case is formed with a case opening plane that exposes the heat conducting material, and the heat conducting material is resin material applied to and cured on each second cell end plane to bond the conducting material to each respective second cell end plane.

2. The power source apparatus as recited in claim 1, wherein the heat conducting material is (electrically) insulating.

3. The power source apparatus as recited in claim 1, wherein the exterior case partially covers the periphery of the heat conducting material around the case opening plane.

4. The power source apparatus as recited in claim 1, wherein the battery holder has step regions established around the inside of the battery holder openings such that the inside diameter of the holder openings increases towards the inside of the battery holder, and the holder openings including the step regions are embedded in the heat conducting material.

5. The power source apparatus as recited in any of the claims 1 to 4, wherein first cell end planes are positive electrodes and second cell end planes are negative electrodes of the plurality of rechargeable battery cells, and each first cell end plane is provided with a gas discharge outlet that opens in response to pressure increase inside the rechargeable battery cell.

6. The power source apparatus as recited in claim 5, wherein a gas discharge path is formed between the outer surface of the battery holder covering the first end planes of the plurality of rechargeable battery cells and the inside surface of the exterior case.

7. The power source apparatus as recited in any of the claims 1 to 4, wherein the heat conducting material is silicone-based or urethane-based resin.

8. The power source apparatus as recited in any of the claims 1 to 4, wherein the thermal conductivity of the heat conducting material is greater than or equal to 1 W/(m·K).

9. The power source apparatus as recited in any of the claims 1 to 4, wherein the battery holder is made of resin.

10. The power source apparatus as recited in any of the claims 1 to 4, wherein each of the plurality of rechargeable battery cells is formed in a circular cylindrical shape.

11. A power source apparatus method of manufacture comprising:
a step to stow the plurality of rechargeable battery cells, which have a first end plane and a second end plane as opposing end planes of each cell, side by side in the battery holder with opposing cell end planes aligned with each first end plane and each second end plane in respective planes while exposing each second cell end plane through a holder opening;
a step to apply heat conducting material, which is uncured resin, to each second cell end plane exposed through a holder opening with the second cell end planes oriented facing upward; and
a step to cure the heat conducting material to solidify and fix it inside the holder openings while forming the exposed surface of the heat conducting material into flat surface.

12. The power source apparatus method of manufacture as recited in claim **11,** wherein the step to cure the heat conducting material and form a flat surface includes inserting the battery holder into the open bottom surface of the exterior case with the heat conducting material in the uncured state and curing the heat conducting material to attach the exterior case.

13. The power source apparatus method of manufacture as recited in claim 12, wherein the step to cure the heat conducting material and form a flat surface includes pressing case extension tabs formed around the exterior case opening plane against the uncured heat conducting material to form a single plane that includes the case extension tabs and the outer surface of the heat conducting material.
